(19) **Europäisches Patentamt**
**European Patent Office**
**Office européen des brevets**

(11) **EP 4 154 731 A1**

(12) **EUROPEAN PATENT APPLICATION**
published in accordance with Art. 153(4) EPC

(43) Date of publication:
**29.03.2023 Bulletin 2023/13**

(21) Application number: **20935885.2**

(22) Date of filing: **14.05.2020**

(51) International Patent Classification (IPC):
**A23L 25/00** (2016.01)     **A23P 30/30** (2016.01)

(52) Cooperative Patent Classification (CPC):
**A23L 25/00; A23P 30/30**

(86) International application number:
**PCT/ES2020/070309**

(87) International publication number:
**WO 2021/229112 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Uriarte Iturrate, S.l.u.**
**01130 Murgia (Alava) (ES)**

(72) Inventors:
• **PÉREZ SIMÓN, Izaskun**
**48395 SUKARRIETA (Vizcaya) (ES)**
• **RODRÍGUEZ FERNÁNDEZ, Raquel**
**48395 SUKARRIETA (Vizcaya) (ES)**
• **RIOJA FEUTRIE, Patricia**
**48395 SUKARRIETA (Vizcaya) (ES)**
• **PERAL DÍEZ, Irene**
**48395 SUKARRIETA (Vizcaya) (ES)**

(74) Representative: **Herrero & Asociados, S.L.**
**Cedaceros, 1**
**28014 Madrid (ES)**

(54) **NUT PRODUCT**

(57)     The present invention belongs to the field of the food industry, in particular to the production of appetizer or snack products. Specifically, it refers to a healthy appetizer product based on nuts with a novel texture, its method of preparation and its use.

EP 4 154 731 A1

**Description**

**Field of invention**

The present invention belongs to the field of the food industry. Specifically, it refers to an expanded nut product with particular organoleptic and nutritional characteristics. It also refers to the method for preparing said product and its use.

**Background of the invention**

In today's diet, appetizers, especially healthy ones, are gaining great interest from consumers. Royal Decree 126/1989 approving the Technical-Sanitary Regulations for the production and marketing of potato chips and appetizer products, establishes that in order to belong to the category of appetizer or snack products, the moisture content of the products does not will exceed the maximum value of 5%.

Appetizers based on starchy ingredients, such as potato snacks, are widely known in the state of the art. Typically, these appetizers are prepared by frying and baking. However, producers of appetizers (also referred to as snacks from here on) have spent decades trying to develop appetizers that are healthier and have more attractive sensory characteristics than those already on the market. Among them, products based on nuts stand out, due to their great nutritional value in terms of minerals and vitamins, high content of protein, fiber and mono- and polyunsaturated fatty acids. However, due to their high fat content, they are difficult to formulate into consumer acceptable appetizer products.

In order to avoid the problems associated with fat, defatted nut appetizers have been described. Thus, for example, US patent 5,498,438 describes a process for preparing nut appetizers, in which the nuts are defatted and also require the presence of emulsifiers. The dough, with defatted nuts, starch, emulsifier and water, is fried or baked to produce the appetizer, subjecting it to relatively high temperatures and long cooking times. This, however, can affect the flavor, nutritional value and evolution of the product during storage, causing it to lose its authentic nutty flavor, its nutritional value and to go rancid more quickly. In addition, this product needs to be in the form of a very thin sheet or wafer (less than 5 mm), which can affect the integrity of the product.

Currently, innovations in the sector of nut appetizers are oriented towards new designs through mixtures of different nuts with each other or with nuts, application of new aromas/flavors and/or the agglomeration of nuts by means of syrups and simple sugars as main ingredients. The strategies used to reduce the caloric intake of nut appetizer products are based on reducing the percentage of nuts with mixtures of dehydrated fruits and cereals mainly. Syrups and sugars are used to unite all these ingredients in consumer portions, which negatively affect the nutritional profile of the appetizers, increasing the content of simple sugars and providing unwanted textures such as elastic and sticky, or crystallized and very hard.

In this sense, document CN 102511738 discloses a method for preparing almond chips also comprising other ingredients. In CN 102511738, a dough is prepared that includes almonds, oats, rice, sugar, salt and cheese. In addition, yeast is added and fermented. Subsequently, said dough, which has a moisture of 25 to 27%, is microwaved. This product does not have an authentic nut flavor and is most likely perceived by consumers as artificial or highly processed and unhealthy.

In any case, to date, the inventors are not aware of the presence of the above-mentioned products on the market. In addition, particularly attractive features of the appetizers are their airy and light character as well as their crispness. However, these characteristics are not always obtainable by the processes described in the state of the art.

Thus, there is a need to develop a method for preparing a nut product that can be classified as an appetizer, that has an aerated and porous texture that is crisp and light at the same time, and that maintains the authentic flavor of the nut. Surprisingly, the authors of the present invention have developed a simple and fast method that results in an appetizer with improved characteristics in terms of texture, that maintains the authentic flavor of nut and that has a long shelf life.

**Object of the invention**

A first aspect of the present invention refers to a food product comprising:

- 45% to 90% of nut (N),
- 5% to 50% of flour and/or starch (F/S),
- moisture less than or equal to 5%,

wherein the percentage is given by weight based on the total weight of the product,

wherein the product has an apparent density less than or equal to 0.60 g/ml, wherein the N comprises N with a particle size of less than 2 mm and N with a particle size greater than or equal to 2 mm, and

wherein the product is an expanded, porous, crispy product with a uniform texture throughout the product.

In a second aspect, the present invention refers to a method for preparing a food product according to the first aspect of the invention, comprising the following steps:

a) preparing a dough comprising:

- 12% to 65% of N,
- 5% to 20% of F/S, and
- 30% to 70% of water,

wherein the percentage is given by weight based on the total weight of the dough, wherein the N comprises N with a particle size of less than 2 mm and N with a particle size greater than or equal to 2 mm;
b) dosing and/or shaping the dough of step a);
c) dehydrating and expanding by microwave heat treatment, optionally
d) coating the product obtained in step c) with a topping.

A third aspect of the present invention refers to a nut food product obtainable by the method according to the second aspect of the invention.
A fourth aspect of the present invention refers to the use of the product according to the first or third aspect of the invention for direct consumption or as an ingredient in the food industry.
Other objects, features, advantages and aspects of the present application will be apparent to those skilled in the art from the description and the appended claims.

**Brief description of the figures**

**Figure 1:** Photographs of the product obtained in Example 1. (A) General view. (B) Sectional view. (C) Photograph with magnifying glass at 10x magnification (10x) of the sectional view.
**Figure 2:** Photograph of the product of the present invention with a uniform distribution of pores and ingredients throughout the volume of the product (right) and of a product obtained by a method other than that of the present invention in which the pores and ingredients are not uniformly distributed throughout the volume of the product (left). Large hollow cavities are seen in the latter product near the top outer part of the product, resulting in differences in texture between the outermost and innermost part of the product.
**Figure 3:** Photograph of the product of the invention with different shapes and nuts (almond and pumpkin seeds (A), pistachio (B), almond (C)).
**Figure 4:** Photographs of a product obtained by baking. (A) Top view. (B) Bottom view. (C) Sectional view.
**Figure 5:** Photographs of a product obtained from a dough with 26% of moisture. (A) Top view. (B) Sectional view. (C) Sectional view, 10x.
**Figure 6:** Photographs of a product obtained from nuts with a particle size of less than 2 mm. (A) Top view. (B) Sectional view. (C) Sectional view, 10x.
**Figure 7:** Photographs of the product of Example 6. Top and sectional view of the 9.35% of moisture product (A). Top view and sectional view product of 2% of moisture (B). Top view, 10x (C, left) and sectional view, 10x (C, right) of the 2% of moisture product.

**Detailed description of the invention**

As used in this application, singular forms, e.g., "a/one", "an" and "the", include their corresponding plurals unless the context clearly indicates otherwise. Unless otherwise defined However, all technical and scientific terms used herein have the meaning that is commonly understood by a person skilled in the art to which this invention belongs. In order to facilitate understanding and clarify the meaning of certain terms in the context of the present invention, the following definitions and particular and preferred embodiments thereof are provided, applicable to all embodiments of the different aspects of the present invention:
In order to define and distinguish between crunchy texture and crispy texture, it has been very useful to separate the sensory analysis in a first bite and in successive chewing of the product (Dijksterhuis et al. (2007) New sensory vocabulary for crisp and crunchy dry model foods, Food Quality and Preference, 18, 37 to 50). Other authors propose the following definitions for both concepts (Michael H. Tunick et al. (2013) Critical Evaluation of Crispy and Crunchy Textures: A Review, International Journal of Food Properties, 16:5, 949-963):

- **Crunchy:** which quickly and easily completely breaks/crashes when bitten with the incisors, while emitting a relatively loud and sharp sound/click
- **Crispy:** that undergoes a series of fractures when chewed with the molars, emitting relatively faint and serious sounds, prolonged over time.

The fracturability is related to cohesion and the force required to break a product into pieces. **Fragile** refers to the fact that it fractures with little deformation, that it can be broken easily, that it has low resistance to fracture. The way of fracturing can be diverse (cracked, breakage, crumbling...).

Friability further specifies the type of fracturability, it is one of the ways in which fracturability is expressed. **Crumbly** refers to easily crumble, low stickiness.

The hardness refers to the force necessary to deform the food (e.g., millstones) or to penetrate an object into it (e.g., teeth). A product is **hard** when said force is high. There are different degrees of hardness, e.g., from less to more: soft, firm, hard. A product is **firm** if it presents a significant resistance to deformation (it is not elastic or plastic).

Granularity is a property related to the perception of the size and shape of the particles in the product. A product with a **grainy** texture (granular) is one in which the size and shape of the particles that compose it are perceived.

A product is **rough** when there is a certain degree of friction perceived by the tongue.

In the context of the present invention, **uniform texture** refers to the fact that the particles of the nut, the other ingredients and the pores are uniformly distributed throughout the volume of the product (in the three dimensions of the product). Thus, there are no differences in texture between the outer or outermost part of the product and the inner part of the product. Likewise, an **expanded product** is understood as that product that has increased its volume, for example, due to changes in its structure. In a particular embodiment of the invention, the increase in volume (expansion) is at least 20%, more particularly it is at least 30%.

In the context of the present invention, the percentages are given by weight relative to the total weight ($w/_tw$), unless otherwise indicated. The weight percent is given on a wet weight basis.

The authors of the present invention have developed a nut-based appetizer product that has a novel and attractive texture, and maintains the authentic flavor of the nut. Thus, in a **first aspect,** the present invention refers to a food product comprising:

- 45% to 90% of nut (N),
- 5% to 50% of flour and/or starch (F/S),
- moisture less than or equal to 5%,

wherein the percentage is given by weight based on the total weight (w/tw) of the product,
wherein the product has an apparent density less than or equal to 0.60 g/ml, wherein the N comprises N with a particle size of less than 2 mm and N with a particle size greater than or equal to 2 mm, and
wherein the product is an expanded, porous, crispy product with a uniform texture throughout the product.

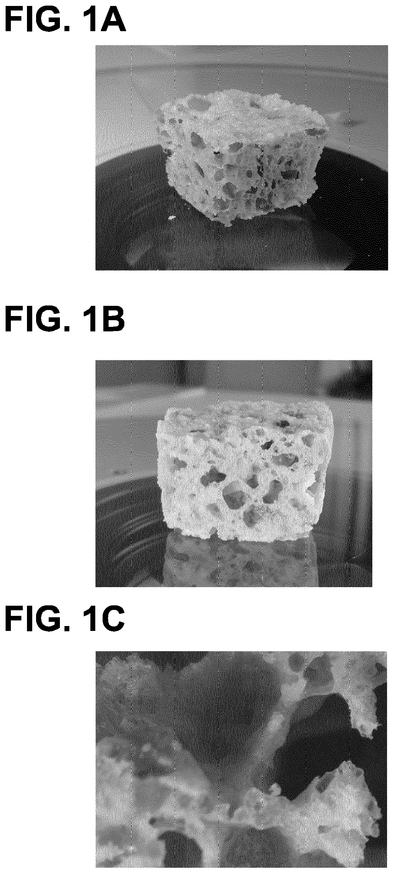

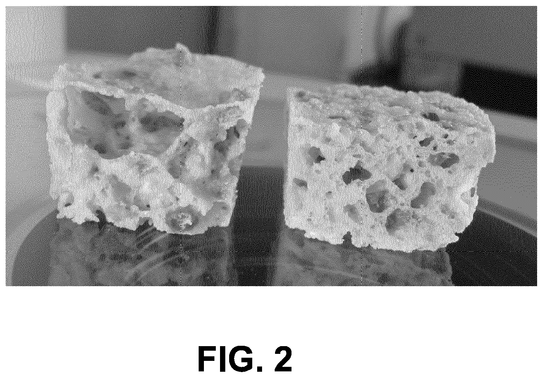

As shown in the examples, the product of the present invention has a marked and persistent crispy texture, which is perceived from the first bite and lasts until the moment before swallowing. The low compactness of the structure, as a result of its high porosity, gives rise to a fragile and friable texture with the successive chewing of the product. It crumbles in the mouth, progressively releasing the particles of nuts, so a grainy texture is perceived and the crispy sensation is maintained until the end. Despite the firmness of the starchy framework, the fragility and friability of this network, due to the discontinuity provided by both the pores and the nut particles throughout the volume of the matrix, means that the texture is not perceived as rough. This firm framework, as well as fragile and friable, facilitates the dragging of those resulting from chewing, therefore, no pasty or sticky sensation is perceived and there are no residues in the mouth after swallowing (see Table 1). In addition, the particles of the nut, the other ingredients and the pores are evenly distributed throughout the volume of the product (See Figures 1 and 2). Thus, the product of the invention has a uniform texture, and more particularly, there are no differences in texture between the interior and exterior of the product.

In a particular embodiment according to any of the previous embodiments, the product does not have roughness and/or does not leave residues in the mouth. More particularly, the product of the invention is brittle and friable. Also, the product is not pasty or sticky.

The product of the present invention is porous (has pores, in particular rounded pores). In a particular embodiment according to any of the previous embodiments, the product of the invention has a porosity of at least 35%, more particularly from 45% to 75%, and preferably from 50% to 75%, which gives it a high feeling of lightness.

The porosity can be calculated by any method known to those skilled in the art. For example, it can be calculated as the sum of the volume of the dough of water evaporated plus the increase in volume experienced by the product during the dehydration-expansion process, for which it is necessary to know the moisture and apparent densities of the dough before dehydration and of the product after dehydration-expansion. It can also be measured by any non-destructive method that allows a three-dimensional reconstruction of the structure of the product by quantifying the attenuation of a sound or electromagnetic signal after passing through the product (for example, hyperspectral, laser, X-ray, ultrasound, pulsed thermography techniques). Likewise, the porosity can be determined by the difference between the apparent density and the real density of the product using physical or chemical methods, such as gas adsorption (e.g., helium pycnometry) or mercury intrusion. In a particular embodiment of the invention, the porosity is measured as explained in Example 1.

Thus, the product of the present invention has a very attractive and novel texture compared to the products based on nuts of the state of the art, which, as shown in the examples, do not have a uniform texture, nor are they light and porous as the product of the present invention.

In a particular embodiment according to any one of the preceding embodiments, the product of the invention has an apparent density less than or equal to 0.4 g/ml, more particularly 0.15 to 0.4 g/ml. In another particular embodiment, the bulk density is measured as explained in Example 1.

In a particular embodiment according to any of the previous embodiments, the product of the invention has a bulk density less than or equal to 0.3 g/ml, preferably less than or equal to 0.25 g/ml and more preferably 0.15 g/ml to 0.25 g/ml. Thus, the product of the present invention has the nutritional properties of the nut it comprises, but is up to 70% lighter in mass per volume than the original nut. In another particular embodiment, the bulk density is measured as explained in Example 1. Regarding the nut, in a particular embodiment according to any of the previous embodiments, the product of the invention comprises 50% to 90% w/w of the N product. More particularly from 60% to 90% and more preferably from 65% to 90%. Thus, products with a high content of nuts are obtained and, therefore, highly healthy and with a more intense and recognizable flavor of the original nuts. Furthermore, these N contents result in optimal expansion, porosity, and texture. The nut may be one nut or a combination of different nuts, and may be raw or roasted. The nuts can be any known to those skilled in the art. In a particular embodiment according to any of the previous embodiments, the product of the invention, the nut is selected from the group consisting of peanuts, pistachios, almonds, walnuts, hazelnuts, pumpkin seeds, cashew nuts, pine nuts, sunflower seeds, and combinations thereof. In particular, the nut may be Brazil nut, Macadamia nut, California nut, Castile nut, Pecan nut, or combinations thereof.

In the present invention it is essential that the N comprises (a) nut particles of size less than 2 mm and (b) nut particles of size greater than or equal to 2 mm. The presence of both types of particles, (a) and (b), allows, among others, to achieve a uniform distribution of pores, N and other ingredients throughout the volume of the product, thus achieving a uniform texture throughout the product. In a particular embodiment, the particles (b) have a size of 2 mm to 8 mm, preferably a size of 2 mm to 6 mm.

As shown in Example 5, in the absence of particles with a size greater than or equal to 2 mm, a product with a defective texture is obtained. Thus, advantageously, in a particular embodiment of the product of the invention according to any one of the embodiments of the first aspect of the invention, the total N content comprises at least 2%, more particularly at least 10% and preferably at least 20%, of N particles greater than or equal to 2 mm. In another particular embodiment of the product of the invention according to any one of the embodiments of the first aspect of the invention, the total N content comprises at least 10% of N particles smaller than 2 mm, more particularly at least 20% and preferably at least 25%, of N particles smaller than 2 mm. More preferably, the total N content comprises or consists of 2% to 90%, more preferably 50% to 80%, of N particles with a size greater than or equal to 2 mm and from 10% to 98%, more preferably from 25% to 50%, of N particles with a size of less than 2 mm. These percentages are given by weight based on the total weight of N in the product of the invention, so that particles (a) and (b) add up to 100% of N.

Regarding the flour and/or starch, in a particular embodiment according to any of the previous embodiments, the product of the invention comprises from 8% to 40% w/w of the F/S product, more particularly from 8% to 35%. These F/S contents result in optimal expansion, porosity and texture.

The flour and/or starch can be any known to those skilled in the art and they can be of one type or a combination of types. For example, the flour may be legume flour, cereal flour, tuber flour, pseudo-cereal flour, or combinations thereof. In a particular embodiment according to any of the above embodiments, the flour is selected from the group consisting of rice flour, corn, tapioca, wheat, oats, millet, rye, barley, spelt, soybean, buckwheat, sweet potato, potato, quinoa and combinations thereof, preferably rice flour, corn flour, tapioca flour and combinations thereof for their expansion properties in food manufacturing.

In the present invention, "starch" refers to a natural or unmodified carbohydrate polymer containing both amylose and amylopectin. It is derived from legumes, grains, and tubers, such as, but not limited to, wheat, corn, tapioca, sago, rice, potato, oats, barley, and amaranth.

The starches used herein also refer to modified starches including, but not limited to, hydrolyzed starches such as maltodextrins, high amylose corn kernels, high amylopectin corn kernels, pure amylose, starches chemically substituted, crosslinked starches and other modifications including, but not limited to chemical, physical, thermal or enzymatic and mixtures thereof.

Both flour and starch can be gelatinized. These include fully gelatinized, partially gelatinized, and pregelatinized F/S. As used herein, "pregelatinized" means that F/S has been treated to gelatinize it. Pregelatinized F/S is usually a dry powder. The pregelatinization is carried out before using F/S to prepare the product of the invention.

In a particular embodiment according to any of the above embodiments, F/S is not pregelatinized or comprises a percentage of pregelatinized starch less than or equal to 30%.

Unlike other products of the state of the art, the product of the present invention achieves its particular texture and porosity without the need to add additional ingredients, in particular ingredients that are normally used to increase the sponginess of a dough, the porosity of a product, or to emulsify fats and prevent the separation of fat:water phases, such as, for example, yeasts, raising agents, gluten, emulsifiers, etc.

Thus, in a particular embodiment according to any of the preceding embodiments, the product of the invention does not comprise an emulsifier, and/or gluten, in particular wheat gluten, and/or yeast, and/or raising agent. More particularly, the product does not comprise an emulsifier and/or gluten, in particular wheat gluten. Nor are ingredients normally used to bind the different ingredients of a dough, such as sugar, syrup or molasses or sticky ingredients with a high content of simple sugars. Thus, in another particular embodiment according to any of the previous embodiments, the product of the invention does not comprise sugar (added sugar), syrup or molasses or sticky ingredients with a high content of simple sugars.

In another particular embodiment according to any one of the previous embodiments, the product of the invention is a product in which the fermentation of any of its ingredients and/or cheese has not been carried out.

In a particular embodiment according to any of the previous embodiments, the product of the invention additionally comprises 0% to 4% w/$_t$w of the product, or 0% to 2%, of salt and/or spices and/or food seasoning. More particularly it comprises >0% to 4% or >0% to 2% salt and/or spices and/or food seasoning (e.g., coffee, garlic, cinnamon, pepper, vanilla). Thus, although the appetizer maintains the flavor of nut, it can be flavored more or even add other flavor notes.

In a particular embodiment according to any one of the previous embodiments, the food seasoning is selected from aroma, colorant, flavor enhancer and mixtures thereof, and preferably it is an aroma or combination of aromas. In another preferred embodiment, the colorant is a natural colorant or a combination of natural colorants. Flavor enhancers are widely known to those skilled in the art. As is known in the food field, flavor enhancers enhance the flavor of foods. In general, they are compounds derived from amino acids and nucleotides that contribute to the development of the 5th taste known as umami. In a particular embodiment, the flavor enhancer is selected from the group consisting of monosodium glutamate, inosinate, guanylate, yeast extract, hydrolyzed proteins and mixtures thereof, preferably the flavor enhancer is monosodium glutamate.

In a particular embodiment according to any of the previous embodiments, the product of the invention comprises a moisture of less than or equal to 3%, preferably less than or equal to 2%, which results in a dry product that is very stable at the microbiological level.

In a particular embodiment according to any one of the preceding embodiments, the product of the invention comprises a fat content greater than or equal to 30%, preferably from 30% to 60%. Thus, the product of the invention, despite its high fat content, has a porous texture and is therefore light.

In another particular embodiment, the product of the invention consists of the ingredients specified according to any one of the previous embodiments, wherein the sum of all the ingredients is 100%.

Surprisingly, the product of the present invention can have thicknesses greater than the products described in the state of the art and very varied shapes. Thus, in a particular embodiment according to any one of the preceding embodiments, the product of the invention has a thickness greater than or equal to 5 mm, more particularly greater than or equal to 10 mm. Preferably, the thickness of the product is greater than or equal to 12 mm, and more preferably it is from 12 mm to 30 mm, and even more preferably it is from 12 mm to 25 mm.

Surprisingly, the products of the present invention are not limited to being chips, wafers, or sheets, like most prior art products. On the contrary, they can have any shape, from geometric shapes to novelty shapes. Examples of geometric shapes include, but are not limited to, cube, prism, tetrahedron, sphere, hemisphere, cone, cylinder, semicylinder. Novelty shapes can be anything from hearts, flowers, numbers, etc.

Thus, in a particular embodiment according to any of the previous embodiments, the product of the invention has a shape other than a sheet, wafer or chip. More particularly, it is not in the form of a sheet, wafer or chip.

In another particular embodiment according to any one of the previous embodiments, the product of the invention has a shape selected from the group consisting of: cube, prism, hemisphere, cylinder, semi-cylinder.

The product of the invention is suitable for coating, covering or wrapping individually or collectively. These additional steps can improve the organoleptic properties of the basic product and are often used in the production of nut-based appetizers today. This includes, but is not limited to, coatings with sugar, syrup, starches, condiments, herbs, spices, chocolate and chocolate analogs. Thus, in a particular embodiment according to any one of the preceding embodiments, the product comprises a coating or is coated by a topping. The coating can be total or partial. Thus, the invention also refers to a coated product comprising the product of the invention according to any one of the embodiments of the first aspect of the invention and a topping. More particularly, said coating or topping comprises sugar, syrup, starches, condiments, herbs, spices, chocolate, chocolate analogs, or combinations thereof. The coated product can have different textures, on the inside it has the texture of the expanded product of the invention and on the outside the texture of the topping. The product of the present invention is suitable for sale and distribution in the common packaging formats used for consumer products. In addition, thanks to its low moisture, it is microbiologically and physically-chemically stable throughout the established shelf life.

The particular and preferred embodiments in relation to the ingredients, texture, shapes, etc. of the product of the invention have been described in detail in the context of the first aspect of the invention and are applicable to the other aspects of the invention.

As indicated above, the authors of the present invention have developed a simple and rapid method to prepare the product of the invention. Thus, a second aspect of the invention refers to a method (method of the invention) for preparing a food product according to the first aspect of the invention. The method of the invention is characterized in that it comprises the following steps:

a) preparing a dough comprising:

- 12% to 65% w/w of nuts (N),
- 5% to 20% w/w of flour and/or starch (F/S), and
- 30% to 70% $w/_t w$ of water,

wherein the percentage is given by weight based on the total weight (i.e., total weight of the dough), and wherein the N comprises N with a particle size of less than 2 mm and N with a particle size greater than or equal to 2 mm;

b) dosing and/or shaping the dough of step a); and
c) dehydrating and expanding by microwave heat treatment.

In a particular embodiment according to any one of the previous embodiments, the dough comprises 35% to 60% of water. As shown in Example 4, amounts of water less than 30% result in faulty textures.

The nut ingredients can be reduced to flour, granular pieces or slices and mixed with the carbohydrate in the form of ground flour, native or modified/pregelatinized starch, as specified in the first aspect of the invention.

In a particular embodiment according to any of the previous embodiments, the dough comprises 5% to 15% $w/_t w$ of F/S. In a particular embodiment according to any one of the previous embodiments, the dough comprises 15% to 60% $w/_t w$ of N, more particularly 25 to 50%. Advantageously, these embodiments result in optimal expansion, porosity, and texture.

As indicated above, nut comprises (a) nut particles smaller than 2 mm in size and (b) nut particles larger than or equal to 2 mm, more particularly, 2 mm to 8 mm in size, preferably 2 mm to 6 mm in size. In the absence of particles with a size greater than or equal to 2 mm, a product with a defective texture is obtained, as explained in Example 5. Thus, advantageously, in a particular embodiment of the product of the invention according to any one of the embodiments of the first aspect of the invention, the total N content comprises at least 2%, more particularly at least 10% and preferably at least 20%, of N particles greater than or equal to 2 mm. In another particular embodiment of the product of the invention according to any one of the embodiments of the first aspect of the invention, the total N content comprises at least 10% of N particles smaller than 2 mm, more particularly at least 20% and preferably at least 25%, of N particles smaller than 2 mm. More preferably, the total content of N comprises from 2% to 90%, more preferably 50% to 80%, of N particles with a size greater than or equal to 2 mm and from 10% to 98%, more preferably from 25% to 50% of N particles smaller than 2 mm. These percentages are given by weight based on the total weight of N in the product of the invention, so that particles (a) and (b) add up to 100% of N.

In a particular embodiment of step a), according to any of the above embodiments, the dough is prepared by mixing all the ingredients at the same time or making a gel or a previous dispersion of the water-starch fractions to achieve the right consistency to work with the dough in the following stages (e.g., molding/dosing) at each specific moisture. More particularly, step a) comprises the following substeps in the following order:

a1) F/S and water are mixed, and a gel is formed,
a2) said gel and the N are mixed.

In this way, the performance of step b) is facilitated, resulting in a great advantage at the industrial level. In addition, an optimal texture of the product of the invention is achieved.

With step b) the size, grammage and shape of the desired portion is provided to the dough. A multitude of industrial methods for carrying out said stage are known to those skilled in the art. Some non-limiting examples are volumetric dosing, laminating or extrusion. Thus, for example, dosing can be carried out by extrusion, volumetric dosing (e.g., rotary, piston) or lamination, and carried out both on a flat surface (e.g. tray, conveyor belt) and on molds to delimit the shape of the product during dehydration-expansion. The preferred method is selected according to the desired form of the product. There is no geometric limitation as to the shape produced in this stage, the product can have any shape, e.g. geometric shape, novel shape, continuous dosed strip, stick or churro shape, etc. Additionally, the shape can be modified through cutting, molding, or other techniques to delimit the dimensions of the desired shape.

In a particular embodiment according to any of the previous embodiments in step b) the shape is different from a sheet, wafer or chip.

In another particular embodiment according to any of the above embodiments in step b), the shape is selected from the group consisting of: cube, prism, hemisphere, cylinder, semi-cylinder.

The thickness of the dough can be any and in particular that which results in a product with a thickness of at least 5 mm, more particularly at least 10 mm. Preferably, a thickness greater than or equal to 12 mm, and more preferably from 12 mm to 30 mm, and even more preferably from 12 mm to 25 mm.

In stage c) the dehydrating and expanding of the product is carried out. The use of microwaves for this stage is essential since, as shown in Example 3, if the dough is baked, a product with a defective texture is obtained. The microwave must supply enough energy to achieve the rate of dehydration necessary to expand and dry the product. The energy range is determined according to the amount of product to be dried (kg of water to be removed in the planned time). In a particular embodiment according to any one of the previous embodiments, is $\geq$ 5 W/g, preferably $\geq$ 10 W/g, more preferably $\geq$ 15 W/g. Advantageously, by applying microwaves, in particular with these particular embodiments, it is possible to dry the dough and generate a porous structure and a crispy texture very quickly, e.g. between 70 and 120 s. With this short heat treatment, the flavor of the starting ingredients is not affected and a product is thus achieved that maintains the original flavor of the nut and limits the appearance of unwanted flavors related to the rancidity of the fat.

The result can be achieved with any combination of microwave technology: for example, microwave generators from 915 to 2500 MHz applied to a multi-mode or single-mode cavity. The applicator can be a batch operated cavity or a continuous cavity with moving conveyor. These are common industrial designs in microwavebased dehydration processes, however alternative cavity designs have been proposed in the prior art and may also serve this application.

The method according to any one of the particular embodiments of the second aspect of the invention optionally comprises a step d), after dehydrating and expanding, in which the expanded product is coated, totally or partially, with a topping. More particularly, said topping comprises sugar, syrup, starches, condiments, herbs, spices, chocolate and chocolate analogs. The product thus obtained is a coated product. The coated product obviously has different textures, on the inside it has the texture of the expanded product and on the outside the texture of the topping.

In a particular embodiment, the method of the present invention consists of steps a) to c), and optionally d), as defined in any of the previous embodiments of the first aspect of the invention.

The combination of the characteristics of composition, conditions and order of the steps of the method of the present invention make it possible to obtain an expanded product, with a particular texture, quickly and easily. Said expanded structure is crispy and highly porous, and is uniform throughout the volume of the product (there are no differences between the texture of the exterior and the interior of the product). The expanded product also has a moisture of less than or equal to 5%, preferably less than or equal to 3%, and more preferably less than or equal to 2%, so it can be classified as an appetizer. Said moisture provides stability, both at a microbiological and physical-chemical level, which results in a product that has a long shelf life without the need for refrigeration (e.g., at 15 °C to 25 °C). Interestingly, the product of the invention has a shelf life of at least 2 months.

As indicated above, the expanded food product obtainable by the method of the invention has novel and very attractive sensory characteristics as an aperitif. Thus, the invention relates, in a third aspect, to a food product obtainable by the method according to any one of the embodiments of the second aspect of the invention. Said product is an expanded, crispy and porous product (particularly, porosity of at least 35%). The pores are evenly distributed throughout the volume of the product, as are the N and F/S particles. The product has a uniform texture throughout the volume of the product (in particular, there are no different textures between the external and internal part of the product).

The product has a moisture of less than or equal to 5%, preferably less than or equal to 3%, and more preferably less than or equal to 2%, so it can be classified as an appetizer. In addition, the product has a long shelf life without the need for refrigeration.

The product of the invention, thanks to its nutritional and sensory properties, allows different modes of consumption and is intended for any type of consumer, especially those aware of the importance of food in health, and also allows different uses. Thus, in a **fourth aspect,** the invention refers to the use of a food product according to any one of the embodiments of the first and third aspects of the invention, for direct consumption or as an ingredient in the food industry.

## EXAMPLES

Some specific embodiments of the invention are detailed below, which serve to illustrate the invention without limiting its scope.

### EXAMPLE 1: Methodology

This example describes the methodology followed to characterize the products described in the following examples, unless otherwise indicated.

### 1.1.- Apparent density

Calculated in g/ml. It relates the weight of a piece of snack with the volume delimited by the contour of the piece. It takes into account the internal porosity of the piece.
It has been measured in a 2-station volumemeter (SBS, Science basic solutions, SL Mod. IVOL-2). Each station has a 250 ml cylinder. Five snack pieces are coated with a layer of Parafilm to define the contour of the piece and prevent sand from penetrating through the pores of the surface. The five pieces are mixed with sea sand, the sand-snack set occupying a total volume of 250 ml, after the compaction of the sand by the vertical back and forth movement of the equipment posts. After 200 back and forth movements and with the density data of the sand (previously determined by compaction in the same instrument) and the weight of the sand-snack set that occupies 250 ml, the volume occupied by the 5 pieces of snack is determined. With the weight of the 5 pieces of snack introduced in the test tube, known in advance, the apparent density of the snack is determined.
The results are the average of 10 pieces of snack.

### 1.2.- Bulk density

Calculated in g/ml. The bulk density takes into account the spaces between snack units or pieces and represents the bulk volume, the volume of a portion or consumption unit, which in the snack sector is basically referenced by the content that fits in a bowl or in a bag.
It has been measured with a 1.5-liter beaker flush with snack pieces. The relationship between the total weight of the pieces and the volume gives us the bulk density of the product.

### 1.3.- Real density

Calculated in g/ml. It relates the weight of a piece of snack to the volume occupied by the solid matter, or "wall" that surrounds the pores, thus excluding the volume of the voids between said matter.
It has been measured by submerging 5 pieces of the snack in refined sunflower oil. The snack pieces are cut in half, placed in a beaker with 100 ml of oil. The total weight of the 10 product halves ($m_p$) is noted. The beaker is placed in a vacuum oven (Binder VD53, Vacuubrand MZ2C pump) and the pressure is reduced to 20 mbar in 8 minutes, these conditions are maintained for 2 min and atmospheric pressure is restored in 2 min. The oil, together with the impregnated sample, is carefully transferred to a test tube and made up to 250 ml with sunflower oil, and the total weight ($t_w$) is noted. The density of the sunflower oil ($d_{ac}$) used has been previously calculated in the 250 ml level cylinder and the weight of the cylinder ($m_{pb}$) noted.

$$(1) \qquad dr = \frac{mp}{vp}$$

wherein:

   dr, real density of the snack (g/ml)
   mp, snack mass (g)
   vp, snack volume (ml)

$$(2) \qquad vp = vt - va$$

*wherein:*
*vt, total volume of oil and impregnated snack (250 ml)*
*va, volume of the oil in the 250 ml of mixture*

$$(3) \quad va = \frac{mt - mpb - mp}{dac}$$

*mt, total mass of test tube, snack and oil up to 250 ml (g)*
*mpb , mass of empty test tube (g)*
*mp , snack mass (g)*
*dac, oil density (g/ml).*

### 1.4.- Expansion (volume increase)

The increase in volume experienced by the snack portions has been calculated as the ratio between the volume occupied by the dry solids of the snack before and after dehydration-expansion, knowing the apparent densities of the fresh dough and of the final product once dehydrated.
The calculation is as follows:

$$(4) \quad e = \frac{\nabla v}{v1} \times 100$$

*wherein:*

*e, expansion (in %)*
*∇v, volume increment (in ml), calculated as v2 - v1*
*v1, volume (ml) of the dosed dough in a snack unit, calculated as weight of the portion of dosed dough (g) divided by the bulk density of the dough (g/ml)*
*v2, volume (ml) of the snack piece, calculated as the final weight of the piece (g) after dehydration-expansion divided by the apparent density of the snack (g/ml).*

### 1.5.- Final product porosity

The porosity of the product is expressed in % of the volume of the snack piece that is occupied by air.
The methodology used to determine the porosity in the examples described is based on the difference between the real and apparent densities of the final product. The applied formula is the following:

$$(5) \quad P = \left(\frac{1}{da} - \frac{1}{dr}\right) \times da$$

*wherein:*

*P, porosity (% of volume of the snack that is occupied by air)*
*da, apparent density of the snack (g/ml)*
*dr, real density of the snack (g/ml).*

### 1.6.- Sensory analysis - Tasting

Sensory evaluation was performed by a panel of trained tasters in the AZTI-Derio sensory laboratory under white light.
Several training sessions were carried out for the tasters in accordance with the UNE-ISO 6658:2019 standard, wherein the texture descriptors were generated and defined, and they learned how to use the evaluation scales. For the training of tasters, different baked and expanded products made at AZTI-Derio were used. The sensory characteristics of the expanded samples were evaluated based on perception over time. The term with which the texture for each sample is described represents the temporal perception of the main characteristics of the texture of the sample, from the first perception when biting to the last perception in the last bite before swallowing.
The descriptors evaluated to determine the texture in the mouth were:

- crisp character, crunchiness, chewiness, aeration, cohesion, roughness, residue in the mouth, hardness and fragility, as described in "Sensory Analysis", 2nd Edition, AENOR (Spanish Association for Standardization and Certification), 2010. The texture description was given based on perception over time. The term used to describe the texture for each sample represents the temporal perception of the main characteristics of the sample's texture, from the first perception when biting to the last perception in the last bite before swallowing:

## EXAMPLE 2: Preparation of the food product of the invention

A microwave peanut snack was prepared, for which the following steps were followed:

a) Prepare a uniform dough following the following sub-steps in this order:

a1) 172 g of pregelatinized rice flour are added to 1056 g of water and mixed with stirring in a heated mixer (type Thermomix, speed 3) and the temperature is set at 100 °C for 6 minutes;
a2) Allow the mixture to cool to a temperature below 60 °C and add:

353 g of roasted peanut pieces, with a granulometry between 2 to 4 mm, and
174g of roasted peanut flour, with a particle size of less than 2 mm;

b) Everything is mixed by hand until a dough is obtained and it is dosed into silicone molds with cubic cavities with a 22x22mm section. 4g are dispensed per cavity up to a total of 44g; and
c) Microwaves are applied at 4 kW for 60 s per mold.

The product obtained has the following characteristics:

**Apparent density:** 0.36 g/ml
**bulk density:** 0.20 g/ml
**Expansion:** 39%
**Porosity:** 64%
**Pore appearance:** rounded pores visible to the naked eye.
**Distribution:** Uniform distribution of pores, peanut pieces and starch network throughout the product.

Figure 1A shows a photo of the product obtained, which is cube-shaped and has dimensions of 22x22x14 mm. As can be seen, the product of the present invention is an expanded and porous product, wherein the pores are distributed throughout the volume of the product, which can be clearly seen in the photos of the different views of the product shown in Figure 1B. Likewise, this is shown in Figure 2 where a product according to the present invention is shown (right), and a product prepared with a method other than that of the present invention (left), showing defects in the distribution of ingredients and pores and therefore, it does not have a uniform texture throughout the volume of the product.

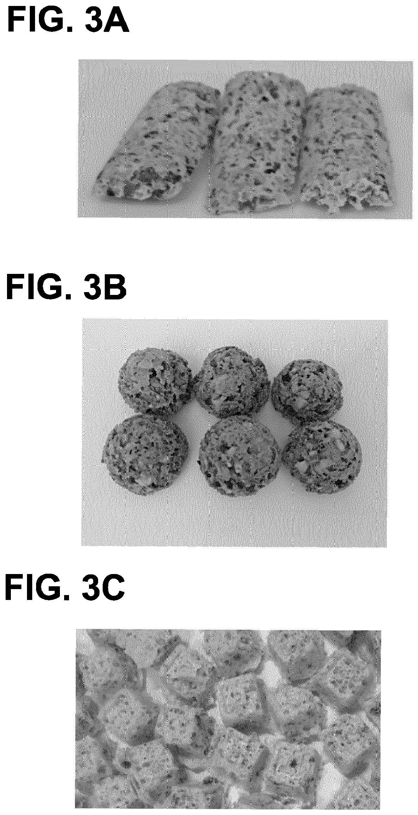

The correct distribution of pores and nuts throughout the volume of the product is achieved in all the products of the invention, regardless of the shape of the final product and the type of nut (see Figure 3).

Regarding texture, the sensory method described in Example 1, section 1.6, in which texture is analyzed based on perception over time, was followed. The product of the present invention has a marked and persistent crispy texture, which is perceived from the first bite and lasts until the moment before swallowing. The low compactness of the structure, as a result of its high porosity, gives rise to a fragile and friable texture with the successive chewing of the product. It crumbles in the mouth, progressively releasing the particles of nuts, so a grainy texture is perceived and the crispy sensation is maintained until the end. Despite the firmness of the starchy framework, the fragility and friability of this network, due to the discontinuity provided by both the pores and the nut particles throughout the volume of the matrix, means that the texture is not perceived as rough. This firm framework, as well as being fragile and friable, facilitates the dragging of those resulting from chewing, so there is no sticky or pasty sensation and no residue remains in the mouth after swallowing (see Table 1).

Surprisingly, the nut particles are evenly distributed throughout the volume of the product. Thus, there are no differences in texture between the inside and outside of the product. The product has a grainy texture with large particles (2 to 4 mm pieces of N) distributed throughout the volume of the product.

Thus, the texture of the product of the present invention is defined by the following attributes: crispy, brittle, friable, grainy, not compact and aerated (not hard, but offers resistance), not pasty, not sticky, with no difference in texture between the exterior and interior of the product.

**EXAMPLE 3.- Effect of the expansion method**

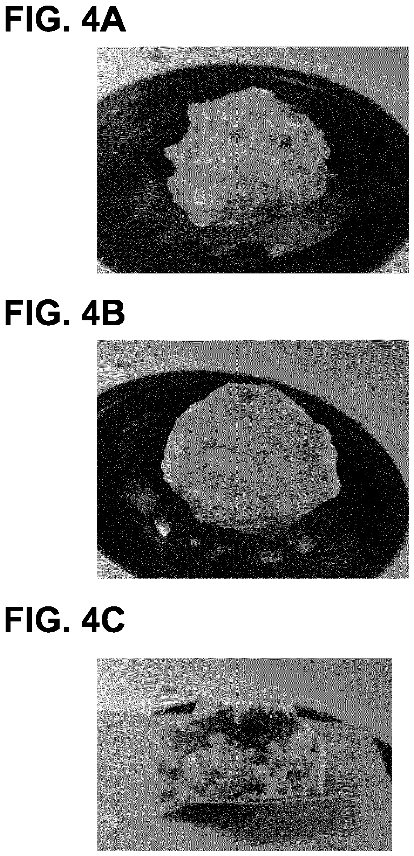

A product is prepared following step a) of Example 2. In step b) it is dispensed with a pastry bag in "round" portions of 4 g on baking paper and in step c) it is baked. Specifically, it is placed at 115 °C and 80% ventilation for 135 min (Binder FP53). As shown in Figure 4, the product obtained does not have a uniform structure or texture. The product is kind of "hollowed out" in the center, so there is a difference between the texture of the outside and the inside of the product. The DFs are not evenly distributed throughout the product.

This product has a clearly dissociated texture, with a marked contrast between the exterior and the interior. A thin crunchy outer layer gives way to a crispy texture on the inside similar to that of the original nuts, but these are concentrated only on the inside. The framework that binds the pieces of nut in the present invention, in this case is concentrated on the outside, so that these pieces are not progressively released as the framework crumbles, as in the present invention, but instead it is similar to chewing nuts alone. This product is crispy but rough (see Table 1). This roughness appears from the first moment in the mouth and is associated with the layer or crust generated during the dehydration of the dough. Forced air dehydration gradually removes the water from the product through the surface, dragging with it the smaller particles, see starch, which are concentrated on the outside, forming a capsule with a more hermetic structure, without pores on the surface (see Fig. 4, top and bottom views). This rigid crust and the concentration of N particles in the base produce a slight abrasion and roughness of the product.

The product of this example tastes stale, possibly due to the long baking required to obtain less than 2% of moisture, like that of the product of the present invention (e.g. 135 min vs. less than 2 min).

**EXAMPLE 4.- Effect of dough moisture**

An almond snack was prepared in the microwave, for which the following stages were followed:

a) Prepare a uniform dough following the following sub-steps in this order:

a1) 281 g of pregelatinized rice flour are added to 368 g of water and mixed with stirring in a heated mixer (type Thermomix, speed 1) and the temperature is set at 100 °C for 6 minutes;
a2) Allow the mixture to cool to a temperature below 60 °C and add:

739 g of raw almond pieces, with a granulometry between 2 to 4 mm, and
367 g of raw almond flour, with a particle size of less than 2 mm;

b) Everything is mixed by hand until a dough is obtained and it is dosed into molds with hemispherical cavities of approx. 4.5ml capacity. 4 g per cavity are dispensed up to a total of 44 g; and
c) Microwaves at 3 kW are applied for 50 s.

The dough from stage a) has 21% of added water, 16% of rice flour and 63% of N (moisture of the dough 26%). The final product has less than 2% of moisture, 18.6% of rice flour and 79.4% N.

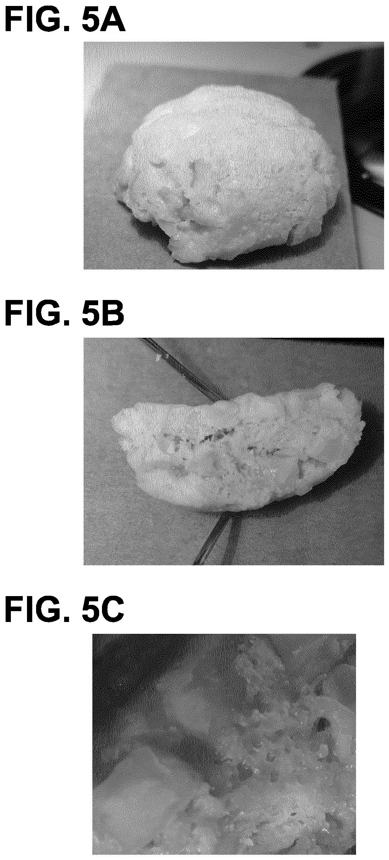

The product is shrunken (little distance between N pieces), compact, with low porosity (15%) and very small pores (Figure 5). It has a -9% expansion. In addition, it is very hard, rough and leaves residue in the mouth.

**EXAMPLE 5.- Effect of N particle size**

An almond snack was prepared in the microwave, following the same methodology described in Example 2. The formulation varies with respect to example 2 only in the nature of the N, raw almond instead of peanut and the use of 100% of N of a size smaller than 2 mm.

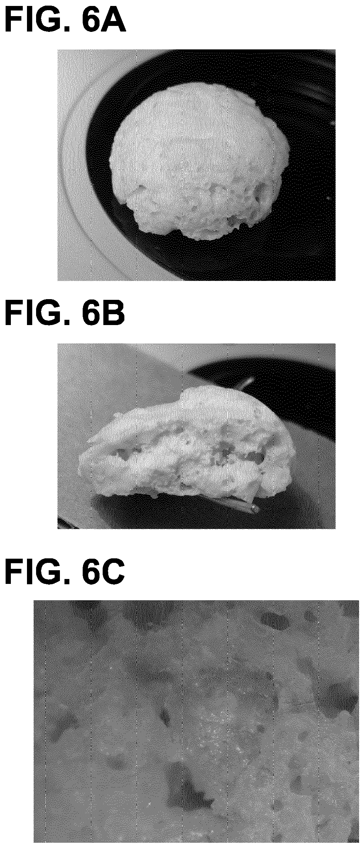

As shown in Figure 6, both the texture and the structure are completely different from that of the product of the invention. The product is shrunken, compact, with low porosity and very small pores, as was the case with the product of Example 4. Furthermore, it is a very hard, gritty, rough product and leaves residue in the mouth. The texture results of the products of Examples 2 to 5 are shown in the following Table.

Table 1.- Comparison of textures

|  | Ex. 2 | Ex. 3 | Ex. 4 | Ex. 5 |
|---|---|---|---|---|
| Texture | crispy-fragile-friable | crunchy- crispy | very hard-crispy | very hard-sandy |

(continued)

|  | Ex. 2 | Ex. 3 | Ex. 4 | Ex. 5 |
|---|---|---|---|---|
| **Featured differentiating aspects** |  | rough | rough | rough |
|  |  |  | leaves residue in the mouth | leaves residue in the mouth |
|  | Grainy (with large particles) | Grainy (with large particles) |  |  |

It is important to note that the samples that have crispness as part of their texture characteristics to be highlighted have two differential aspects, and in a certain way negative, that the product of the present invention does not have:

o A rough hue, probably due to the compactness/hardness of the network or structure that contains the nuts and/or the generation of a crust or impermeable outer layer composed mainly of starch.
o leave residue in the mouth
o the characteristics of the aerated and porous network that contains the pieces of nuts of the present invention give it a fragility or lightness of texture and seem to mitigate that sensation of roughness and facilitate the elimination or dragging of possible fruit residues after chewing.

## EXAMPLE 6.- Comparative Example

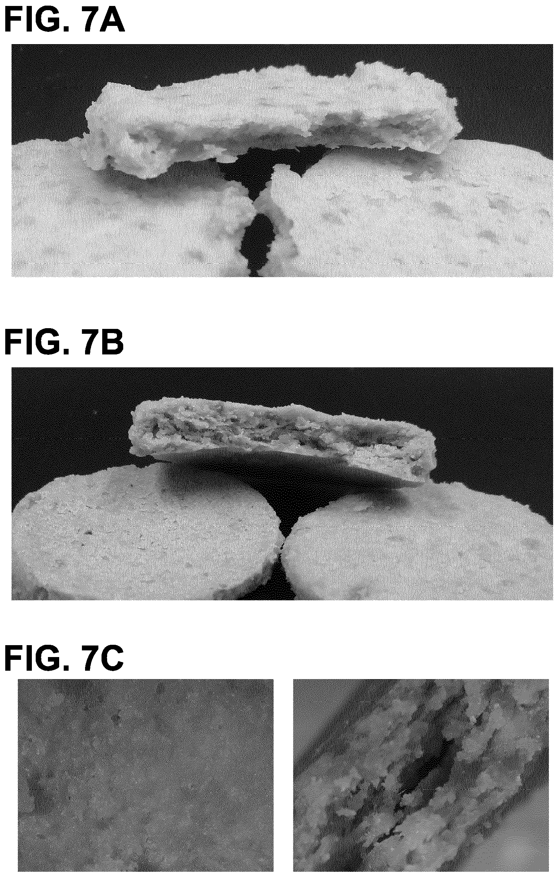

Example 4 of US 5,498,438 was reproduced, with the difference that roasted peanuts were used, a nut different from Pecan nuts, but with a percentage of fat (48%) similar to that used in said example. The peanut was crushed in a grinder and sieved until it had two fractions of different granulometry, a large fraction (between 1.19 mm and 1.68 mm) and a small fraction (less than 0.595 mm). 166 g of the large fraction were mixed with 667 g of the small fraction, 135 g of potato starch and 22.5 g of emulsifier (glycerol monostearate). To this mixture of solids, 510 g of water was added little by little, mixing at the same time until a uniform dough was obtained after 5 min of kneading (Sammic Go-Pro). The dough was rolled out with a rolling pin until a 0.5 cm sheet was obtained. The sheet was cut with a circular mold of 4.5 cm in diameter, which was baked as described in said document (163 °C, 15 min). Thus, a product with a moisture of 9.35% and a real density of 0.742 g/ml is obtained. Said product is not crisp and appears like a tea paste (Figure 7A).
The product has a much lower porosity than the product of the present invention. Furthermore, as seen in Figure 7A, the product does not have pores but air layers, arranged in a parallel manner, as normally occurs in tea cakes. Thus, the product does not have a uniform texture with pores evenly distributed throughout the volume of the product.
The product was dried longer, to reduce its moisture to 2% and, even so, the dried product was not crisp either and also had rancid flavor notes (in total it was 45 min at 163 °C). The dry product has a density of 0.754 g/ml and, as seen in Figures 7B and 7C, N and F/S form a structure with stratified sheets that leave parallel layers of air between them. Thus, this product has a different texture than the product of the present invention since it does not have a uniform texture wherein the pores, N and F/S are evenly distributed throughout the volume of the product.

## Claims

1. Food product **characterized in that** it comprises:

   - 45% to 90% of nut (N),
   - 5% to 50% of flour and/or starch (F/S),
   - moisture is less than or equal to 5%,

   wherein the percentage is given by weight based on the total weight of the product, wherein the product has an apparent density less than or equal to 0.60 g/ml, wherein the N comprises N with a particle size of less than 2 mm and N with a particle size greater than or equal to 2 mm, and wherein the product is an expanded, porous, crispy product with a uniform texture throughout the product.

2. Food product according to claim 1, having a porosity greater than or equal to 35%.

3. Food product according to claim 1 or 2, having a porosity of 50% to 75%.

4. Food product according to any one of the preceding claims, wherein the product does not show roughness and/or does not leave residues in the mouth.

5. Food product according to any one of the preceding claims, wherein the apparent density is less than or equal to 0.4 g/ml.

6. Food product according to any one of the preceding claims, having a bulk density less than or equal to 0.3 g/ml.

7. Food product according to the preceding claim, wherein the bulk density is from 0.15 g/ml to 0.25 g/ml.

8. Food product according to any one of the preceding claims, comprising a moisture less than or equal to 3%.

9. Food product according to any one of the preceding claims, comprising a fat content greater than or equal to 30%.

10. Food product according to any one of the preceding claims, wherein the N comprises at least 2% of N with a particle size greater than or equal to 2 mm and/or at least 10% of N with a particle size of less than 2 mm.

11. Food product according to any one of the preceding claims, having a thickness greater than or equal to 5 mm.

12. Food product according to the preceding claim, which has a thickness greater than or equal to 10 mm.

13. Food product according to any one of the preceding claims that is not in the form of a sheet or wafer.

14. Food product according to any one of the preceding claims, having a shape selected from the group consisting of cube, prism, hemisphere, cylinder and semi-cylinder.

15. Food product according to any one of the preceding claims, comprising 50% to 90% of N.

16. Food product according to any one of the preceding claims, comprising 8% to 40% of F/S.

17. Food product according to any one of the preceding claims, which additionally comprises from 0% to 4% of salt and/or spices and/or food seasoning.

18. Food product according to any one of the preceding claims that does not comprise an emulsifier and/or gluten and/or yeast and/or raising agent and/or added sugar.

19. Food product according to any one of the preceding claims, wherein the nut is selected from the group consisting of peanuts, pistachio, almonds, walnuts, hazelnuts, pumpkin seeds, cashew nuts, sunflower seeds, pine nuts, and combinations thereof.

20. Food product according to any one of the preceding claims, comprising a topping coating it partially or totally.

21. Method for preparing a food product according to any one of the preceding claims, **characterized in that** it comprises the following steps:

    a) preparing a uniform dough comprising:

        - 12% to 65% of N,
        - 5% to 20% of F/S, and
        - 30% to 70% of water,
        wherein the percentage is given by weight based on the total weight of the dough, and
        wherein the N comprises N with a particle size of less than 2 mm and N with a particle size greater than or equal to 2 mm;

    b) dosing and/or shaping the dough of step a);
    c) dehydrating and expanding by microwave heat treatment;

optionally

d) coating the product obtained in step c), partially or totally, with a topping.

22. Method according to claim 21, wherein the dough comprises 15% to 60% of N.

23. Method according to claim 21 or 22, wherein the dough comprises 5% to 15% of F/S.

24. Method according to any one of claims 21 to 23, wherein the dough comprises 35% to 60% of water.

25. Method according to any one of claims 21 to 24, wherein the N comprises at least 2% of N with a particle size greater than or equal to 2 mm and/or at least 10% of N with a particle size of less than 2 mm.

26. Method according to any one of claims 21 to 25, wherein in step a) F/S is in the form of a gel.

27. Method according to any one of claims 21 to 26, wherein in step b) the shape is other than a sheet or wafer.

28. Method according to any one of claims 21 to 27, wherein in step b) the shape is selected from the group consisting of cube, prism, hemisphere, cylinder and semi-cylinder.

29. Food product obtainable by the method according to any one of claims 21 to 28.

30. Use of a food product according to any one of claims 1 to 20 and 29 for direct consumption or as an ingredient in the food industry.

FIG. 1A

FIG. 1B

FIG. 1C

FIG. 2

# FIG. 3A

# FIG. 3B

# FIG. 3C

# FIG. 4A

# FIG. 4B

# FIG. 4C

# FIG. 5A

# FIG. 5B

# FIG. 5C

# FIG. 6A

# FIG. 6B

# FIG. 6C

# FIG. 7A

# FIG. 7B

# FIG. 7C

**EP 4 154 731 A1**

<table>
<tr><td colspan="2" align="center">**INTERNATIONAL SEARCH REPORT**</td><td>International application No.<br>PCT/ES2020/070309</td></tr>
</table>

**A. CLASSIFICATION OF SUBJECT MATTER**

*A23L25/00* (2016.01)
*A23P30/30* (2016.01)
According to International Patent Classification (IPC) or to both national classification and IPC

**B. FIELDS SEARCHED**

Minimum documentation searched (classification system followed by classification symbols)
A23L, A23P

Documentation searched other than minimum documentation to the extent that such documents are included in the fields searched

Electronic data base consulted during the international search (name of data base and, where practicable, search terms used)

EPODOC, INVENES, WPI, FSTA, INTERNET

**C. DOCUMENTS CONSIDERED TO BE RELEVANT**

| Category* | Citation of document, with indication, where appropriate, of the relevant passages | Relevant to claim No. |
|---|---|---|
| A | US 5498438 A (STRONG ET AL) 12/03/1996,<br>Examples 1-8; column 3, lines 53-67; column 4, lines<br>34-64; column 7, line 59-column 9, line 67 | 1-30 |
| A | GB 1180686 A (IMPERIAL TOBACCO COMPANY OF<br>CANADA LIMITED) 11/02/1970,<br>Pages 1-2. | 1-30 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search<br>19/01/2021 | Date of mailing of the international search report<br>(25/01/2021) |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>J. López Nieto<br><br><br>Telephone No. 91 3498426 |

Form PCT/ISA/210 (second sheet) (January 2015)

Form PCT/ISA/210 (patent family annex) (January 2015)

| INTERNATIONAL SEARCH REPORT | | International application No. | |
|---|---|---|---|
| Information on patent family members | | PCT/ES2020/070309 | |
| Patent document cited in the search report | Publication date | Patent family member(s) | Publication date |
| US5498438 A | 12.03.1996 | NZ244209 A<br>CA2076058 A1<br>AU2205392 A | 26.10.1995<br>07.03.1993<br>11.03.1993 |
| GB1180686 A | 11.02.1970 | CA861445 A | 19.01.1971 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5498438 A

- CN 102511738

**Non-patent literature cited in the description**

- **DIJKSTERHUIS et al.** New sensory vocabulary for crisp and crunchy dry model foods. *Food Quality and Preference,* 2007, vol. 18, 37-50

- **MICHAEL H. TUNICK et al.** Critical Evaluation of Crispy and Crunchy Textures: A Review. *International Journal of Food Properties,* 2013, vol. 16 (5), 949-963
- Sensory Analysis. AENOR, 2010